# EUROPÄISCHE PATENTANMELDUNG

(11) **EP 1 908 559 A1**
(43) Veröffentlichungstag der Anmeldung: **09.04.2008**
(21) Anmeldenummer: 07019515.1
(22) Anmeldetag: 05.10.2007
(51) Int. Cl.: B25F 5/02, H01M 2/10, H01M 10/48

(54) **Elektrohandwerkzeuggerät**

(30) Priorität: 07.10.2006 DE 202006015385 U
(71) Anmelder: Metabowerke GmbH, 72622 Nürtingen (DE)
(72) Erfinder: Seyerle, Jörg, 73257 Köngen (DE)
(74) Vertreter: Langöhrig, Angelika Beate

(57) **Zusammenfassung**

Die Erfindung betrifft ein Elektrohandwerkzeuggerät umfassend ein Akkumulatormodul (30), das in ein Gehäuse des Elektrohandwerkzeuggerätes in einer Einschubrichtung (24) einschiebbar ist mit zwei einander gegenüberliegenden, quer zur Einschubrichtung (24) bewegbaren Rastelementen (28) zum lösbaren Festlegen des Akkumulatormoduls (30) am Gehäuse sowie einem Zellenhalter (10) zur Aufnahme und Halterung von Akkumulötorzellen (18), bei dem der Zellenhalter (10) als Verschlussdeckel (12) für das Gehäuse ausgebildet ist und die Rastelemente (28) zur Verrastung mit dem Gehäuse trägt.

## Beschreibung

Die Erfindung betrifft ein Elektrohandwerkzeuggerät umfassend ein Akkumulatormodul, das in ein Gehäuse des Elektrohandwerkzeuggeräts in einer Einschubrichtung einschiebbar ist mit zwei einander gegenüberliegenden, quer zur Einschubrichtung bewegbaren Rastelementen zum lösbaren Festlegen des Akkumulatormoduls am Gehäuse sowie einem Zellenhalter zur Aufnahme und Halterung von Akkumulatorzellen.

Derartige Elektrohandwerkzeuge sind im Stand der Technik vielfach bekannt. So werden generell Elektrohandwerkzeuge, insbesondere Bohrer und Schrauber, sowohl mit kabelgebundener Stromversorgung als auch mit Akkumulatoren zur kabellosen Stromversorgung angeboten. Hierbei ist es in aller Regel vorgesehen, dass im Bereich des pistolenförmigen Handgriffs des Elektrohandwerkzeuggeräts an dessen dem eigentlichen Werkzeug abgewandten Ende der Akkumulator aufgesteckt oder teilweise eingeschoben werden kann. Dabei sind zum einen Akkumulatorgehäuse bekannt, die aus zwei in Einsteckrichtung übereinander angeordneten becherförmigen Elementen bestehen, die gemeinsam das Akkumulatorgehäuse bilden und zum anderen sind Akkumulatorgehäuse vorgesehen, die aus zwei in Längsrichtung, die der Einschubrichtung entspricht, gegeneinander anliegenden Gehäuseschalen bestehen.

Ein ersterer Typ eines Akkumulators ist beispielsweise aus der DE 203 15 329 U1 bekannt sowie der DE 101 24 537.

Dabei sind aus dem Stand der Technik verschiedene Möglichkeiten zum Entriegeln des Akkumulators im Gehäuse des Elektrohandwerkzeuggeräts bekannt, wobei beispielsweise die DE 103 13 187 ein Akkumulatormodul beschreibt, mit zwei Fingerpressflächen, die ein Auslösen des Akkumulatormoduls aus dem Gehäuse des Elektrohandwerkzeuggeräts ermöglichen.

Nachteilig beim bekannten Stand der Technik ist zum einen bei den Akkumulatorgehäusen, die sich aus zwei übereinander angeordneter. Becherelementen zusammensetzen, dass diese verhältnismäßig groß und schwer sind und so der Maschine einen für das Arbeiten ungünstigen Schwerpunkt verleihen und diese unhandlich machen.

Bei kleineren Akkumulatorgehäusen, wie sie insbesondere auch in Akkuschraubern verwendet werden, konnte dieses Problem bereits verbessert werden.

Ausgehend vom bekannten Stand der Technik ist es Aufgabe der Erfindung, ein Elektrohandwerkzeuggerät bereitzustellen, bei dem das Akkumulatormodul möglichst gewichtsparend und aus wenigen Teilen aufgebaut ist und darüber hinaus bauraumsparend mit einem Elektrohandwerkzeuggerät verbunden werden kann.

Die Erfindung löst diese Aufgabe durch ein Elektrohandwerkzeuggerät der gattungsgemäßen Art, wobei der Zellenhalter zugleich als Verschlussdeckel für das Gehäuse ausgebildet ist und somit das Gehäuse des Elektrohandwerkzeugs verschließt und die Rastelemente zur Verrastung mit dem Gehäuse trägt.

Auf diese Weise kann erreicht werden, dass die Befestigung besonders einfach gestaltet werden kann, bei gleichzeitiger sicherer Verrastung am Gehäuse des Elektrohandwerkzeuggeräts, eine entsprechende Verrastung ist ansonsten bei aus zwei Bechern bestehenden Gehäusen von Akkumulatormodulen nur aufwendig zu realisieren, bei denen die Verrastungselemente an dem dem Elektrohandwerkzeug zugewandten Becherelement des Akkumulatormodulgehäuses vorgesehen sind. Auch muss dann die untere, das Gewicht der Akkuzellen tragende Gehäuseschale sicher an der oberen fixiert werben. Darüber hinaus kann durch die Doppelfunktion als Zellenhalter sowie als Träger der Verrastelemente und Verschlussdeckel für das Gehäuse des Elektrohandwerkzeuggeräts die Teileanzahl reduziert werden.

Ein derartiges Akkumulatormodul kann kostengünstig hergestellt werden und ist darüber hinaus leicht vorzumontieren. Hierbei weist insbesondere über die Einheit von Zellenhalter und Verschlussdeckel, wobei keine zusätzliche Montage der beiden Teile zueinander notwendig ist, das Akkumulatormodul eine einfache Montierbarkeit auf, indem in entsprechende Ausnehmungen des Zellenhalters die Akkumulatorzellen lediglich eingesetzt werden. Auf der dem Elektrohandwerkzeuggerät in Einschubrichtung zugewandten Ende der Akkumulatorzellen können dann weitere Abstandshalterelemente angebracht sein, die ein Inberührungkommen der Akkumulatorzellen miteinander und somit mögliche Kurzschlüsse verhindern. An diesen Elementen können auch bereits elektrische Kontaktierungselemente vorgesehen sein.

Des Weiterer kann nach einem ersten Ausführungsbeispiel vorgesehen sein, dass am Verschlussdeckel Betätigungsflächen vorgesehen sind, die mit den Rastelementen zusammenwirken zum Bewegen der Rastelemente von einer mit dem Gehäuse verrasteten in eine entriegelte Position. Diese Betätigungsflächen können vorzugsweise einander gegenüberliegend am Verschlussdeckel angeordnet sein und insbesondere können die Rastelemente ausgehend vom Boden des Verschlussdeckels in Einschubrichtung von diesem beabstandet sein, wobei auch die Betätigungselemente in Richtung der Einschubrichtung vom Boden des Verschlussdeckels beabstandet sein können, und zwischen den Betätigungsflächen und dem Boden des Verschlussdeckels die Verbindungsbereiche federnd ausgestaltet sind, so dass durch Zusammendrücken der Betätigungsflächen die hiermit verbundenen Rastelemente, die insbesondere mit Hinterschnitten oder in Aussparungen des Gehäuses zusammenwirken, aus diesen herausbewegt werden und so ein Herausziehen, des Akkumulatormoduls aus dem Gehäuse des Elektrohandwerkzeuggeräts möglich wird.

Es kann des Weiteren vorgesehen sein, dass mit dem Verschlussdeckel ein Becherelement eines Akkumulatormodulgehäuses verbindbar ist, insbesondere formschlüssig verbindbar ist. Dabei kann vorgesehen sein, dass das Becherelement entgegen der Einschubrichtung des Akkumulatormoduls in ein Elektrohandwerkzeuggerät auf den Verschlussdeckel aufsetzbar ist und mit diesem insbesondere formschlüssig verrastet wird. Das Becherelement kann dabei auf seiner dem Elektrohandwerkzeuggerät zugewandten Ende Ausnehmungen sowie Elemente zur elektrischen Kontaktierung vorsehen, die wiederum mit den elektrischen Kontakten der Akkumulatorzellen in Kontakt stehen und so eine elektrische Verbindung mit dem Elektrohandwerkzeuggerät ermöglichen. Darüber hinaus können im Becherelement weitere Elektronikkomponenten eingebracht sein. Dabei erfolgt die Kontaktierung der Elemente des Becherelements mit den Akkumulatorzellen bevorzugt durch einfaches Aufsetzen des Becherelements zusammen mit diesen nach Festlegung. Vorteilhaft ist hierbei, dass das Becherelement keinen mechanischen Belastungen ausgesetzt ist und daher entsprechend nicht lasttragend ausgelegt sein muss.

Des Weiteren ist nach einer besonders bevorzugten Ausführungsform vorgesehen, dass die Akkumulatorzellen und/oder das Becherelement durch das Gehäuse des Elektrohandwerkzeuggeräts im eingeschobenen Zustand des Akkumulatormoduls umschlossen sind. D. h., im eingeschobenen Zustand des Akkumulatormoduls ist lediglich der Verschlussdeckel, und hiervon insbesondere die Betätigungsflächen, sowie der Boden des Deckels und die Verbindungsbereiche zwischen dem Boden und den Betätigungsflächen zu erkennen. Der Rest des Akkumulatormoduls ist dann im Elektrohandwerkzeuggerät aufgenommen. Auf diese Weise kann vermieden werden, dass, wie es ansonsten vielfach bei Akkugeräten vorgesehen ist, ein unhandlicher Akkumulatorfuß an das Elektrohandwerkzeuggerät angesetzt wird. Auf diese Weise kann insbesondere auch die Handhabbarkeit der Maschine verbessert werden und das Elektrohandwerkzeuggerät in seiner Gesamtheit kann weniger klobig ausfallen.

Es kann dabei vorgesehen sein, dass die Rastelemente und/oder die Betätigungsflächen einstückig am Verschlussdeckel angeformt sind, dies ist besonders leicht zu realisieren, wenn der Verschlussdeckel als Spritzgussteil ausgebildet ist. Die Verbindungsbereiche zwischen Verschlussdeckel und Betätigungsflächen sind dabei als Federelemente ausgebildet und lassen eine wiederholte elastische Verformung sowie Rückstellung zu.

Weitere Vorteile und Merkmale der Erfindung ergeben sich aus den weiteren Anmeldungsunterlagen. Die Erfindung soll im Folgender anhand einer Zeichnung näher erläutert werden.

Dabei zeiger
- Figuren 1 und 2: einen Verschlussdeckel in einer perspektivischen bzw. in einer Frontalansicht;
- Figur 3: einen Verschlussdeckel mit eingesetzten Akkumulatorzellen; und
- Figuren 4 bis 6: zwei Seitenansichten sowie eine Ansicht von oben des Akkumulatormoduls mit aufgesetztem Becherelement.

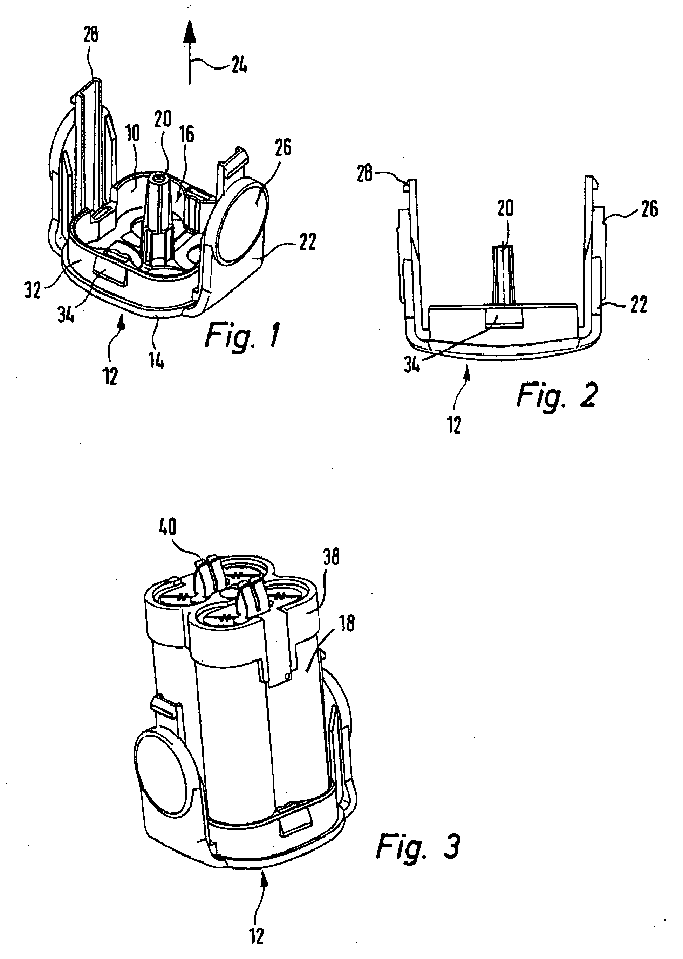

Figur 1 zeigt einen Zellenhalter 10 für ein Akkumulatormodul, der zugleich als Verschlussdeckel 12 eines Gehäuses eines Elektrohandwerkzeuggeräts (nicht dargestellt) ausgebildet ist.

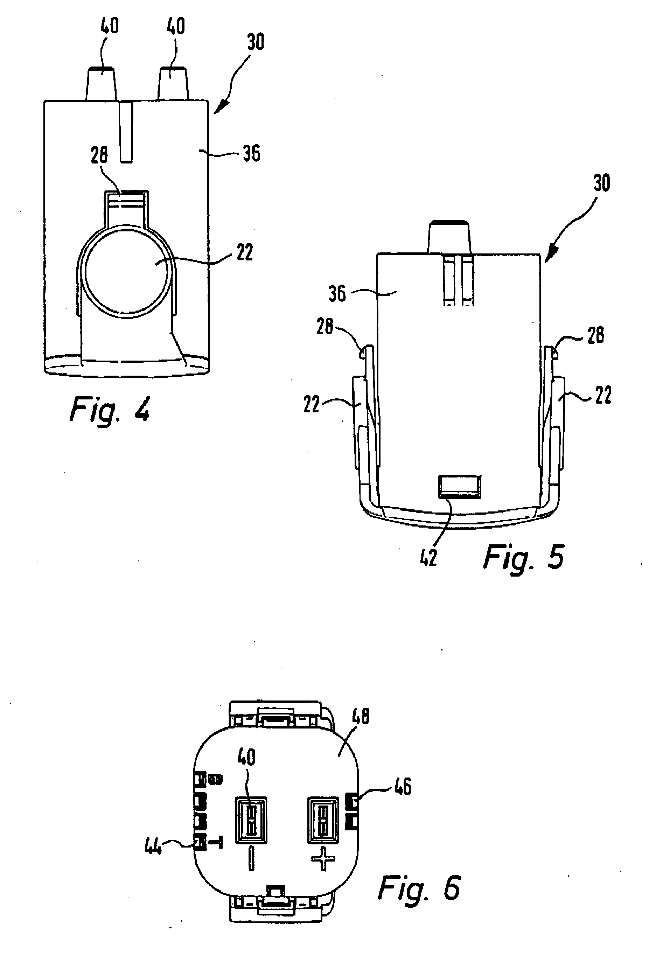

Der Deckelboden ist dabei mit dem Bezugszeichen 14 versehen. Der Zellenhalter 10 weist vier Aufnahmen 16 auf, in die Akkumulatorzellen 18 (Figur 3) eingesetzt werden können. In der Mitte des Zellenhalters 10 ist ein Dorn 20 vorgesehen, der für die Beabstandung und räumliche Trennung der Akkumulatorzellen 18 Sorge trägt. Des Weiteren umfasst der Verschlussdeckel 12 Federelemente 22, die sich quer zur Einschubrichtung, die mit dem Pfeil 24 bezeichnet ist, durch Fingerdruck auf Betätigungsflächen 26 aufeinander zu bewegen lassen. Die Betätigungsflächen 26, die einstückig mit den Federelementen 22 verbunden sind, sind wiederum mit Rastelementen 28 verbunden und wirken mit diesen zusammen, so dass durch Bewegung der Betätigungsflächen durch Fingerdruck eines Bedieners des Elektrohandwerkzeuggeräts die Rastelemente 28 mitbewegt werden und so außer Eingriff mit Ausnehmungen (nicht dargestellt) im Gehäuse des Elektrohandwerkzeuggeräts gebracht werden können, so dass das Akkumulatormodul, das in seiner Gesamtheit mit dem Bezugszeichen 30 in Figuren 4 und 5 versehen ist, bewegt werden kann. Die Betätigungsflächen 26 sind dabei in Richtung der Einschubrichtung vom Boden 14 beabstandet und durch die Federelemente 22 mit diesem verbunden.

Die Ausnehmungen 16 des Zellenhalters werden durch eine im Wesentlicher, umlaufende Seitenwand 32 begrenzt, wobei in der Seitenwand 32 Rastelemente 34 zum Aufsatz eines Becherelements 36 vorgesehen sind, über die das Becherelement 36 mit dem Verschlussdeckel 12 verrastet werden kann.

In Figur 2 ist der Verschlussdeckel 12 gemäß Figur 1 in einer Ansicht von vorne dargestellt, wohingegen Figur 1 eine perspektivische Ansicht desselben zeigt. Der Verschlussdeckel 12 ist dabei als Kunststoffteil einteilig im Spritzgussverfahren ausgebildet. Auf diese Weise können auch die Federelemente unmittelbar angeformt werden.

Figur 3 zeigt den Verschlussdeckel 12 nun mit aufgenommenen Akkumulatorzellen 18, wobei auf das Ende der Akkumulatorzellen 18, das in Richtung auf ein Elektrohandwerkzeuggerät weist, eine Abstandshalterkappen 38 aufgebracht ist, die für die Fixierung der freien Enden der Akkumulatorzellen 18 sorgt und darüber hinaus Mittel zum Kontaktieren 40 der Akkumulatorzellen 18 mit entsprechenden Gegenstücken im Elektrohandwerkzeuggerät beinhaltet.

Figuren 4 und 5 zeigen zwei Seitenansichten des vollständigen Akkumulatormoduls 30 mit aufgesetztem Becherelement 36, wobei das Becherelement 36 eine Öffnung 42 aufweist, in die das Rastmittel 34 an der Seitenwand 32 des Verschlussdeckels 12 einrastet.

Das Becherelement 36 weist, wie insbesondere in Figur 6 erkannt werden kann, neben den Elementen 40 zur elektrischer, Kontaktierung mit dem Elektrohandwerkzeuggerät, weitere Aussparungen und elektrische Kontakte 44 und 46 auf und darüber hinaus ist im Becherelement weitere Elektronik insbesondere im Bereich des Deckels 48 eingegossen, die der beispielsweise Ladezustandsüberwachung des Akkumulators dient.

Im eingesetzten Zustand in einem Gehäuse eines Elektrohandwerkzeuggeräts sind dann lediglich noch der Boden 14 sowie die Federelemente 22 und die Betätigungsflächen 26 für einen Benutzer sichtbar, so dass neben einer guten Handhabbarkeit auch eine entsprechende Optik geschaffen wird.

Auf die vorstehend beschriebene Weise kann besonders einfach und mit wenigen Bauteilen ein Akkumulatormodul 30 bereitgestellt werden, das vollständig in ein Gehäuse eines Elektrohandwerkzeuggeräts einschiebbar ist, so dass nach Einschieben lediglich der Boden 14 sowie die Seitenelemente 22 und die Betätigungsflächen 26 für einen Benutzer des Elektrohandwerkzeuggeräts erkennbar sind. Aufgrund der geringen Teileanzahl ist darüber hinaus die Montage des Akkumulatormoduls vereinfacht und besonders kostengünstig.

## Patentansprüche

1. Elektrchandwerkzeuggerät umfassend ein Akkumulatormodul (30), das in ein Gehäuse des Elektrohandwerkzeuggerätes in einer Einschubrichtung (24) einschiebbar ist mit zwei einander gegenüberliegenden, quer zur Einschubrichtung (24) bewegbaren Rastelementen (28) zum lösbaren Festlegen des Akkumulatormoduls (30) am Gehäuse sowie einem Zellenhalter (10) zur Aufnahme und Halterung von Akkumulatorzellen (18), **dadurch gekennzeichnet, dass** der Zellenhalter (10) als Verschlussdeckel (12) für das Gehäuse ausgebildet ist und die Rastelemente (28) zur Verrastung mit dem Gehäuse trägt.

2. Elektrohandwerkzeuggerät nach Anspruch 1, **dadurch gekennzeichnet, dass** am Verschlussdeckel (12) Betätigungsflächen (26) vorgesehen sind, die mit den Rastelementen (28) zusammenwirken zum Bewegen der Rastelemente (28) von einer mit dem Gehäuse verrasteten in eine entriegelte Position.

3. Elektrohandwerkzeuggerät nach Anspruch 1 oder 2, **dadurch gekennzeichnet; dass** mit dem Verschlussdeckel (12) ein Becherelement (36) zur Bildung eines Akkumulatormodulsgehäuses verbindbar, insbesondere formschlüssig verbindbar und insbesondere entgegen der Einschubrichtung auf den Verschlussdeckel (12) aufsteckbar ist.

4. Elektrohandwerkzeuggerät nach einem der vorangehenden Ansprüche, **dadurch gekennzeichnet, dass** die Akkumulatorzellen (18) und/oder das Becherelement (36) durch das Gehäuse im eingeschobenen zustand des Akkumulatormoduls (30) umschlossen ist.

5. Elektrchandwerkzeuggerät nach einem der vorangehenden Ansprüche, **dadurch gekennzeichnet, dass** in dem Becherelement (36) Mittel zur elektrischen Kontaktierung (40, 44, 46) des Akkumulatormoduls (30) mit den Elektrohandwerkzeuggerät vorgesehen sind.

6. Elektrchandwerkzeuggerät nach einem der vorangehenden Ansprüche, **dadurch gekennzeichnet, dass** die Rastelemente (28) und/oder die Betätigungsflächen (36) einstückig an einem Boden (14) des Verschlussdeckels (12) angeformt und insbesondere über Federelemente (22) mit diesem verbunden sind.

7. Elektrchandwerkzeuggerät nach einem der vorangehenden Ansprüche, **dadurch gekennzeichnet, dass** der Verschlussdeckel (12) als Spritzgussteil ausgebildet ist.
